# EUROPEAN PATENT SPECIFICATION

(11) **EP 4 414 827 B1**
(45) Date of publication and mention of the grant of the patent: **04.11.2026**
(21) Application number: 22903246.1
(22) Date of filing: 28.11.2022
(51) Int. Cl.: G06F 3/16, G10L 25/18, G10L 25/69, G10L 19/02

(54) **AUDIO CHANNEL SELECTION METHOD AND APPARATUS, STORAGE MEDIUM AND VEHICLE**
VERFAHREN UND VORRICHTUNG ZUR AUDIOKANALAUSWAHL, SPEICHERMEDIUM UND FAHRZEUG
PROCÉDÉ ET APPAREIL DE SÉLECTION DE CANAL AUDIO, SUPPORT DE STOCKAGE ET VÉHICULE

(30) Priority: 06.12.2021 CN 202111477265
(43) Date of publication of application: 14.08.2024
(73) Proprietor: Huawei Technologies Co., Ltd., Shenzhen, Guangdong 518129 (CN)
(72) Inventor: HUANG, Jiaqi, Guangdong 518129 (CN)
(74) Representative: Epping - Hermann - Fischer
(86) International application number: PCT/CN2022/134735
(87) International publication number: WO 2023/103824

(56) References cited:
- CN-A- 104 966 518
- CN-A- 104 966 518
- CN-A- 105 657 154
- CN-A- 105 657 154
- CN-A- 106 713 978
- CN-A- 108 600 917
- CN-A- 109 561 344
- CN-A- 111 050 265
- CN-A- 112 037 825
- CN-A- 112 599 133
- JP-A- 2007 258 881
- US-A1- 2016 073 158

## Description

### TECHNICAL FIELD

This application relates to the field of audio technologies, and in particular, to an audio channel selection method and apparatus, a storage medium, and a vehicle

### BACKGROUND

As science and technology rapidly develop, vehicles have become an indispensable transportation means for travel. In addition, people currently require vehicles not only to be a transportation means, but also to be endowed with more functions. For example, a voice call or audio play is performed on the vehicle. In these scenarios, better audio quality indicates better user experience.

Currently, audio channels on a vehicle are usually used for fixed scenarios separately. In this case, a selected audio channel may not necessarily make current audio quality optimal. As a result, user experience is poor. Therefore, an audio channel selection method that can improve audio quality is urgently required.

CN 105 657 154 A discloses a method for selecting an audio channel. The method comprises following steps: installing an application program with an audio function; obtaining the version information of the application program; detecting whether there is an audio channel preset for the application program in a terminal; if not, utilizing the standard audio data in the terminal to test the performances of all audio channels set for the application program, thus obtaining test results; obtaining the optimum test result; determining the audio channel corresponding to the optimum test result as the optimum audio channel; and adapting the optimum audio channel to the application program.

CN 108 600 917 A discloses a kind of built-in type multiplex audio frequency controller methods in onboard system field, and time-domain audio signal is transformed to frequency-domain audio signals first, is then detected to the validity of audio, invalid source of sound is filtered; Secondly, when input be multichannel sound source signal when, the state of input can be compared with the strategy pre-defined for system, determine which road source of sound and the sequencing of output exported, the output policy of the self-defined MCVF multichannel voice frequency of energy of the invention, solve the problems, such as that the embedded product sound intermediate frequency output policy of modem Multi-audio-frequency input often changes, so that modification audio output strategy no longer needs to recompilate software, the shortcomings that compensating for existing built-in type multiplex audio management system underaction, improve the customizability of system, it can be used in onboard audio management.

### SUMMARY

In view of this, an audio channel selection method and apparatus, a storage medium, and a vehicle are proposed. The invention is defined in the claims.

According to a first aspect, an embodiment of this application provides an audio channel selection method. The method is applied to a vehicle, and the method includes: sending a first audio sequence to each audio channel, and collecting each second audio sequence output by each audio channel; determining, based on each second audio sequence, an audio channel with optimal audio quality corresponding to the second audio sequence; and selecting the audio channel with optimal audio quality for voice play when a voice service is obtained.

According to this embodiment of this application, the audio channel with optimal audio quality corresponding to the second audio sequence is determined by collecting the second audio sequence. Therefore, when the voice service is obtained, the audio channel with optimal audio quality may be selected for voice play, so that a channel for current voice play is selected based on audio quality. In this way, when a user performs a voice call on the vehicle, audio quality during voice play is better. This improves user experience.

According to the first aspect, in a first possible implementation of the audio channel selection method, the determining, based on each second audio sequence, an audio channel with optimal audio quality corresponding to the second audio sequence includes: performing framing and windowing on the second audio sequence based on a predetermined frame length and a predetermined frame shift, and determining each sample frame; determining each indicator value of each audio channel based on the sample frame; and determining, based on each indicator value of each audio channel and a preset weight corresponding to each indicator value, the audio channel with optimal audio quality corresponding to the second audio sequence.

According to this embodiment of this application, framing and windowing are performed on the second audio sequence, so that the second audio sequence can be easily processed to determine the indicator value. The audio channel with optimal audio quality corresponding to the second audio sequence is determined based on the indicator value and the preset weight corresponding to each indicator value. In this way, determined audio quality of each second audio sequence is more accurate, and an audio channel corresponding to better audio quality can be determined, so that when a voice service is obtained, audio quality of played voices is better. This improves user experience.

According to the first possible implementation of the first aspect, in a second possible implementation of the audio channel selection method, the indicator value includes a first indicator value, and the determining each indicator value of each audio channel based on the sample frame includes: determining each first indicator value of each audio channel based on a sampling rate and/or quantization precision of the sample frame.

According to this embodiment of this application, each first indicator value is determined based on the sampling rate and/or the quantization precision, so that audio quality of each second audio sequence can be more accurately quantized. In this way, an audio channel corresponding to better audio quality can be determined, so that when a voice service is obtained, audio quality of played voices is better.

According to the first or the second possible implementation of the first aspect, in a third possible implementation of the audio channel selection method, the indicator value includes a second indicator value, and the determining each indicator value of each audio channel based on the sample frame includes: determining a quantity of invalid frames in sample frames, where the invalid frame is a sample frame in which a quantity of points that meet a preset condition in sampling points of the frame is greater than a predetermined threshold, and the points that meet the preset condition are determined based on amplitudes of the sampling points; and determining each second indicator value of each audio channel based on the quantity of invalid frames.

According to this embodiment of this application, each second indicator value is determined based on the quantity of invalid frames, so that audio quality of each second audio sequence can be more accurately quantized. In this way, an audio channel corresponding to better audio quality can be determined, so that when a voice service is obtained, audio quality of played voices is better.

According to the first, second, or third possible implementation of the first aspect, in a fourth possible implementation of the audio channel selection method, the indicator value includes a third indicator value, and the determining each indicator value of each audio channel based on the sample frame includes: determining a cut-off frequency of each sample frame based on a header frequency, a trailer frequency, and a maximum roll-off value of each sample frame, where the maximum roll-off value is a difference between a header power value and a trailer power value of the sample frame; and determining each third indicator value of each audio channel based on the cut-off frequency of each sample frame.

According to this embodiment of this application, each third indicator value is determined based on the cut-off frequency, so that audio quality of each second audio sequence can be more accurately quantized. In this way, an audio channel corresponding to better audio quality can be determined, so that when a voice service is obtained, audio quality of played voices is better.

According to the first, second, third, or fourth possible implementation of the first aspect, in a fifth possible implementation of the audio channel selection method, the indicator value includes a fourth indicator value, and the determining each indicator value of each audio channel based on the sample frame includes: performing Fourier transform on each sample frame to obtain a transformed sample frame; determining, based on the transformed sample frame, two sub-band signals having a same bandwidth in a positive frequency component; and determining each fourth indicator value of each audio channel based on energy values of the two sub-band signals.

According to this embodiment of this application, each fourth indicator value is determined based on the energy values of the sub-band signals, so that audio quality of each second audio sequence can be more accurately quantized. In this way, an audio channel corresponding to better audio quality can be determined, so that when a voice service is obtained, audio quality of played voices is better.

According to the first, second, third, fourth, or fifth possible implementation of the first aspect, in a sixth possible implementation of the audio channel selection method, the indicator value includes a fifth indicator value, and the determining each indicator value of each audio channel based on the sample frame includes: obtaining a high frequency component and a low frequency component of a transformed sample frame by performing wavelet transform on each sample frame; and determining each fifth indicator value of each audio channel based on the high frequency component and the low frequency component.

According to this embodiment of this application, each fifth indicator value is determined based on the high frequency component and the low frequency component, so that audio quality of each second audio sequence can be more accurately quantized. In this way, an audio channel corresponding to better audio quality can be determined, so that when a voice service is obtained, audio quality of played voices is better.

According to the first aspect or the first or second or third or fourth or fifth or sixth possible implementation of the first aspect, in a seventh possible implementation of the audio channel selection method, the determining, based on each second audio sequence, an audio channel with optimal audio quality corresponding to the second audio sequence includes: determining, based on each second audio sequence, whether each audio channel has a fault; and determining an audio channel that does not have a fault and that has optimal audio quality corresponding to the second audio sequence.

According to this embodiment of this application, whether each audio channel has a fault is determined, so that a faulty audio channel can be excluded and a play exception risk is reduced during voice play. This improves user experience.

According to the first aspect or the first or second or third or fourth or fifth or sixth or seventh possible implementation of the first aspect, in an eighth possible implementation of the audio channel selection method, the audio channel includes at least one of a speaker channel, a line output channel, and a universal serial bus USB audio channel. Therefore, an audio channel with better audio quality may be flexibly selected, to improve user experience. According to a second aspect, an embodiment of this application provides an audio channel selection apparatus. The apparatus is used in a vehicle, and the apparatus includes: a sending and collecting module, configured to: send a first audio sequence to each audio channel, and collect each second audio sequence output by each audio channel; a determining module, configured to determine, based on each second audio sequence, an audio channel with optimal audio quality corresponding to the second audio sequence; and a selecting module, configured to select the audio channel with optimal audio quality for voice play when a voice service is obtained.

According to the second aspect, in a first possible implementation of the audio channel selection apparatus, the determining module is configured to: perform framing and windowing on the second audio sequence based on a predetermined frame length and a predetermined frame shift, and determine each sample frame; determine each indicator value of each audio channel based on the sample frame; and determine, based on each indicator value of each audio channel and a preset weight corresponding to each indicator value, the audio channel with optimal audio quality corresponding to the second audio sequence.

According to the first possible implementation of the second aspect, in a second possible implementation of the audio channel selection apparatus, the indicator value includes a first indicator value, and the determining each indicator value of each audio channel based on the sample frame includes: determining each first indicator value of each audio channel based on a sampling rate and/or quantization precision of the sample frame.

According to the first or the second possible implementation of the second aspect, in a third possible implementation of the audio channel selection apparatus, the indicator value includes a second indicator value, and the determining each indicator value of each audio channel based on the sample frame includes: determining a quantity of invalid frames in sample frames, where the invalid frame is a sample frame in which a quantity of points that meet a preset condition in sampling points of the frame is greater than a predetermined threshold, and the points that meet the preset condition are determined based on amplitudes of the sampling points; and determining each second indicator value of each audio channel based on the quantity of invalid frames.

According to the first, second, or third possible implementation of the second aspect, in a fourth possible implementation of the audio channel selection apparatus, the indicator value includes a third indicator value, and the determining each indicator value of each audio channel based on the sample frame includes: determining a cut-off frequency of each sample frame based on a header frequency, a trailer frequency, and a maximum roll-off value of each sample frame, where the maximum roll-off value is a difference between a header power value and a trailer power value of the sample frame; and determining each third indicator value of each audio channel based on the cut-off frequency of each sample frame.

According to the first, second, third, or fourth possible implementation of the second aspect, in a fifth possible implementation of the audio channel selection apparatus, the indicator value includes a fourth indicator value, and the determining each indicator value of each audio channel based on the sample frame includes: performing Fourier transform on each sample frame to obtain a transformed sample frame; determining, based on the transformed sample frame, two sub-band signals having a same bandwidth in a positive frequency component; and determining each fourth indicator value of each audio channel based on energy values of the two sub-band signals.

According to the first, the second, the third, the fourth, or the fifth possible implementation of the second aspect, in a sixth possible implementation of the audio channel selection apparatus, the indicator value includes a fifth indicator value, and the determining each indicator value of each audio channel based on the sample frame includes: obtaining a high frequency component and a low frequency component of a transformed sample frame by performing wavelet transform on each sample frame; and determining each fifth indicator value of each audio channel based on the high frequency component and the low frequency component.

According to the second aspect or the first or second or third or fourth or fifth or sixth possible implementation of the second aspect, in a seventh possible implementation of the audio channel selection apparatus, the determining module is configured to: determine, based on each second audio sequence, whether each audio channel has a fault; and determine an audio channel that does not have a fault and that has optimal audio quality corresponding to the second audio sequence.

According to the second aspect or the first or second or third or fourth or fifth or sixth or seventh possible implementation of the second aspect, in an eighth possible implementation of the audio channel selection apparatus, the audio channel includes at least one of a speaker channel, a line output channel, and a universal serial bus USB audio channel.

According to a third aspect, an embodiment of this application provides an audio channel selection apparatus. The apparatus includes: a processor; and a memory configured to store executable instructions of the processor, where the processor is configured to implement the audio channel selection method according to one or more of the first aspect or the possible implementations of the first aspect when executing the instructions.

According to a fourth aspect, an embodiment of this application provides a non-volatile computer-readable storage medium storing computer program instructions; and when the computer program instructions are executed by a processor, the audio channel selection method according to one or more of the first aspect or the possible implementations of the first aspect is implemented.

According to a fifth aspect, an embodiment of this application provides a terminal device. The terminal device may perform the audio channel selection method according to one or more of the first aspect or the possible implementations of the first aspect.

According to a sixth aspect, an embodiment of this application provides a computer program product, including computer-readable code or a non-volatile computer-readable storage medium carrying computer-readable code. When the computer-readable code runs in an electronic device, a processor in the electronic device performs the audio channel selection method according to one or more of the first aspect or the possible implementations of the first aspect.

These and other aspects of this application are more concise and easy to understand in descriptions of the following (a plurality of) embodiments.

### BRIEF DESCRIPTION OF DRAWINGS

The accompanying drawings included in the specification and constituting a part of the specification together with the specification show example embodiments, features, and aspects of this application, and are used to explain principles of this application.
FIG. 1 is a schematic diagram of an application scenario according to an embodiment of this application;
FIG. 2 is a flowchart of an audio channel selection method according to an embodiment of this application;
FIG. 3 is a flowchart of an audio channel selection method according to an embodiment of this application;
FIG. 4a is a schematic diagram of a path corresponding to a LINEOUT channel according to an embodiment of this application;
FIG. 4b is a schematic diagram of a path corresponding to a USB AUDIO channel according to an embodiment of this application;
FIG. 4c is a schematic diagram of a path corresponding to a SPK channel according to an embodiment of this application;
FIG. 5 is a flowchart of an audio channel selection method according to an embodiment of this application;
FIG. 6 is a diagram of a structure of an audio channel selection apparatus according to an embodiment of this application; and
FIG. 7 is a diagram of a structure of an electronic device 100 according to an embodiment of this application.

### DESCRIPTION OF EMBODIMENTS

The following describes in detail various example embodiments, features, and aspects of this application with reference to the accompanying drawings. Same reference numerals in the accompanying drawings indicate elements with same or similar functions. Although various aspects of embodiments are shown in the accompanying drawings, the accompanying drawings do not need to be drawn to scale unless otherwise noted.

The term "example" specifically used herein means "used as an example, an embodiment, or an illustration". Any embodiment illustrated herein as an "example" is not necessarily construed as being superior to or better than other embodiments.

In addition, to better describe this application, the following specific implementations provide many specific details. A person skilled in the art should understand that this application may also be implemented without some specific details. In some instances, methods, means, elements, and circuits that are well known by a person skilled in the art are not described in detail, to highlight a main purpose of this application.

As science and technology rapidly develop, vehicles have become an indispensable transportation means for travel. In addition, people currently require vehicles not only to be a transportation means, but also to be endowed with more functions. For example, a voice call or audio play is performed on a vehicle. In these scenarios, better audio quality indicates better user experience.

Currently, audio channels on a vehicle are usually used for fixed scenarios separately. For example, in a speaker (speaker, SPK) channel, a speaker SPK is connected only to a T-Box for an emergency call (emergency call, ECALL); a line output (LINEOUT) channel is used only for a breakdown call (breakdown call, BCALL); and a universal serial bus audio (USB AUDIO) channel is used only for a voice call, namely, a Bluetooth call (Bluetooth call, BTCALL). An audio channel determined by using a fixed channel method may not necessarily make current audio quality optimal. As a result, user experience is poor. Therefore, an audio channel selection method that can improve audio quality is urgently required.

In view of this, this application provides an audio channel selection method. The audio channel selection method in embodiments of this application may be applied to a vehicle. In this method, a first audio sequence is sent to each audio channel, and each second audio sequence output by each audio channel is collected. In addition, an audio channel with optimal audio quality corresponding to the second audio sequence is determined based on each second audio sequence, so that when a voice service is obtained, the audio channel with optimal audio quality may be selected for voice play. Audio quality of the second audio sequence is detected, so that a channel for current voice play is selected based on the audio quality. In this way, when a user performs a voice call on the vehicle, audio quality during voice play is better. This improves user experience.

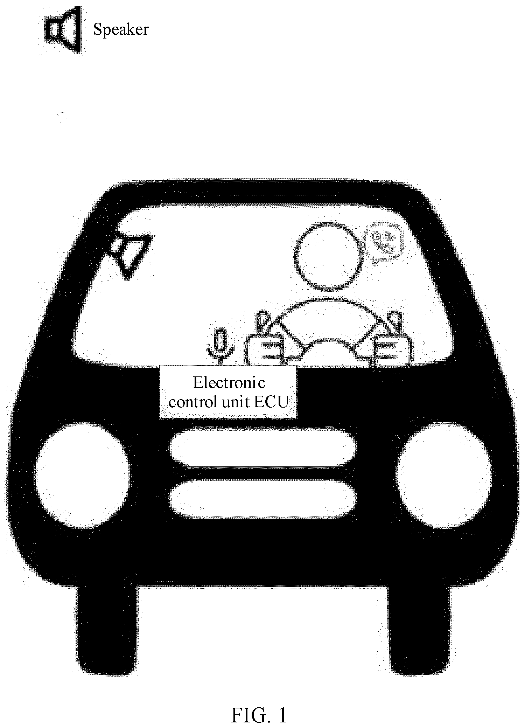

FIG. 1 is a schematic diagram of an application scenario according to an embodiment of this application. As shown in FIG. 1, the audio channel selection method in this embodiment of this application may be applied to a vehicle. An electronic control unit (electronic control unit, ECU) may be disposed on the vehicle. The ECU may be a vehicle-mounted T-Box (telematics box), a head unit, or a combination thereof. This is not limited in this application. The ECU may be configured to: detect audio quality of a voice played on each audio channel, determine an audio channel with optimal audio quality, and select the audio channel with optimal audio quality for voice play when a voice service is obtained. A speaker may be further disposed on the vehicle. The speaker may be connected to the T-Box and/or the head unit, and is configured to play a voice based on a selected audio channel when a voice service is obtained.

In a possible implementation, the audio channel selection method in this embodiment of this application may be applied to a scenario in which a user makes a voice call on the vehicle. In this scenario, a triggered voice service type may be any one of ECALL, BCALL, and BTCALL. The voice service type may be triggered by the user or determined through sending of a base station. A corresponding audio channel may be selected based on the triggered voice service type. In the conventional technology, these different voice service types generally have corresponding audio channels for voice play, for example, ECALL corresponds to a SPK channel, BCALL corresponds to a LINEOUT channel, and BTCALL corresponds to a USB AUDIO channel. According to the method in this embodiment of this application, the ECU may send the first audio sequence to each audio channel, collect second audio sequences output by these audio channels, and determine, based on the second audio sequences, an audio channel with optimal audio quality corresponding to the second audio sequence. Therefore, if a voice service is obtained, for example, the user is in an ECALL voice call, and the LINEOUT channel is determined as an audio channel with optimal audio quality among the SPK channel, the LINEOUT channel, and the USB AUDIO channel, the LINEOUT channel with better audio quality may be selected for voice play, instead of the SPK channel corresponding to an original ECALL service. According to this embodiment of this application, because the audio channel corresponding to optimal audio quality is selected for voice play, when the user makes a voice call, audio quality of voices heard by the user is better. This can improve user experience.

It should be noted that this application may also be applied to another scenario in which a voice is played on a vehicle. This is not limited in this application.

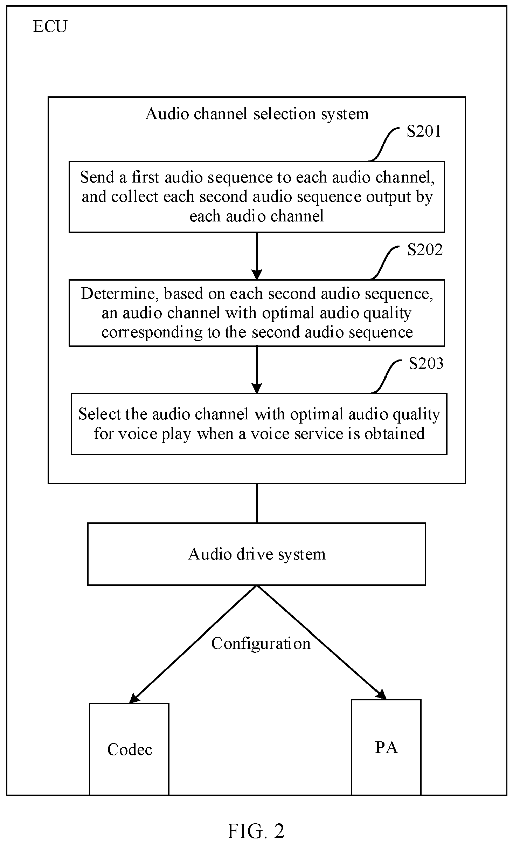

FIG. 2 is a flowchart of an audio channel selection method according to an embodiment of this application. The method may be applied to a vehicle, for example, an ECU in the vehicle. The ECU may include an audio channel selection system, an audio drive system, a codec Codec, and an amplifier (amplifier, PA). As shown in FIG. 2, the method includes the following steps.

Step S201: An audio channel selection system sends a first audio sequence to each audio channel, and collects each second audio sequence output by each audio channel.

The first audio sequence may be sent to each audio channel at a preset time interval (for example, 30 minutes) or at a preset time point, each second audio sequence output by each audio channel is collected, and subsequent steps are performed. This is not limited in this application. Therefore, an audio channel selection result may be updated, so that when a voice service is obtained, an audio channel corresponding to highest audio quality may be selected for voice play.

The audio channel may include at least one of a SPK channel, a LINEOUT channel, and a USB AUDIO channel. The first audio sequence may be formed by combining one or more segments of audio data, and sampling rates and/or quantization precision of the segments of audio data may be different. The first audio sequence may be preconfigured in the audio channel selection system, or may be input in the audio channel selection system. The sampling rates and/or the quantization precision of the segments of audio data may be determined as required. This is not limited in this application. Other parameters of the segments of audio data may also be determined as required, and this is not limited in this application.

Each time step S201 is performed, the same first audio sequence may be played on different audio channels, and each second audio sequence output by each audio channel is collected. Audio quality of each second audio sequence is detected, an audio channel with optimal audio quality corresponding to the second audio sequence may be determined. Therefore, before next performing of step S201 and subsequent steps to update the audio channel selection result, if a voice service is obtained, the audio channel may be selected for voice play. In this way, audio quality of voices heard by a user can be better.

Step S202: The audio channel selection system determines, based on each second audio sequence, the audio channel with optimal audio quality corresponding to the second audio sequence.

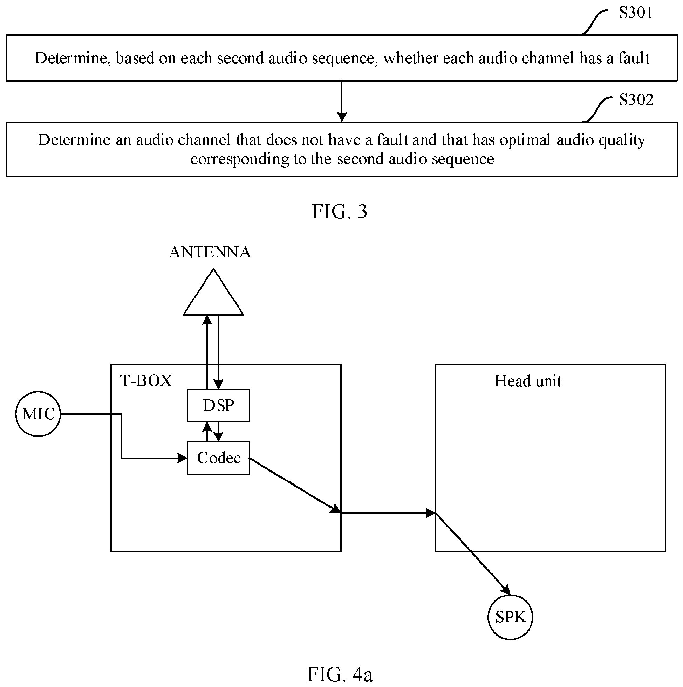

In a possible implementation, it may be first determined whether each audio channel has a fault in a voice playing process, so that a faulty audio channel can be excluded. For the process, refer to FIG. 3.

FIG. 3 is a flowchart of an audio channel selection method according to an embodiment of this application. As shown in FIG. 3, step S202 includes the following steps.

Step S301: Determine, based on each second audio sequence, whether each audio channel has a fault.

For each audio channel, it may be determined, based on the second audio sequence, whether a path corresponding to each audio channel has a line fault like line disconnection, to determine whether each audio channel has a fault. For example, when the second audio sequence is an empty sequence, or an amplitude corresponding to the second audio sequence is far lower than an amplitude of the first audio sequence (for example, an average amplitude is less than 5% of an average amplitude of the first audio sequence), it may be considered that line disconnection occurs in a path of a corresponding audio channel, that is, the corresponding audio channel has a fault. A manner of determining, based on each second audio sequence, whether each audio channel has a fault may also be another manner. This is not limited in this application.

For example, for paths corresponding to the SPK channel, the LINEOUT channel, and the USB AUDIO channel, refer to FIG. 4a to FIG. 4c.

FIG. 4a is a schematic diagram of a path corresponding to a LINEOUT channel according to an embodiment of this application. As shown in FIG. 4a, the path corresponding to the LINEOUT channel may include a T-Box, a head unit, a microphone (microphone, MIC), an antenna Antenna, and a speaker SPK. The T-Box may include a digital signal processor (digital signal processor, DSP) and a codec Codec. An arrow in the figure may correspond to a line in a path, and indicates a flow direction of audio data. After the audio data is input through the microphone, the audio data may be encoded by the codec and then sent to the DSP for processing. After the DSP processes the data, the data may be sent to the antenna. The antenna may be configured to communicate with a baseline to implement a call. The DSP may receive the returned audio data, and send the audio data to the codec for decoding, and the audio data is sent to the head unit, and sent, through the head unit, to the speaker for playing, to implement a voice call on a vehicle.

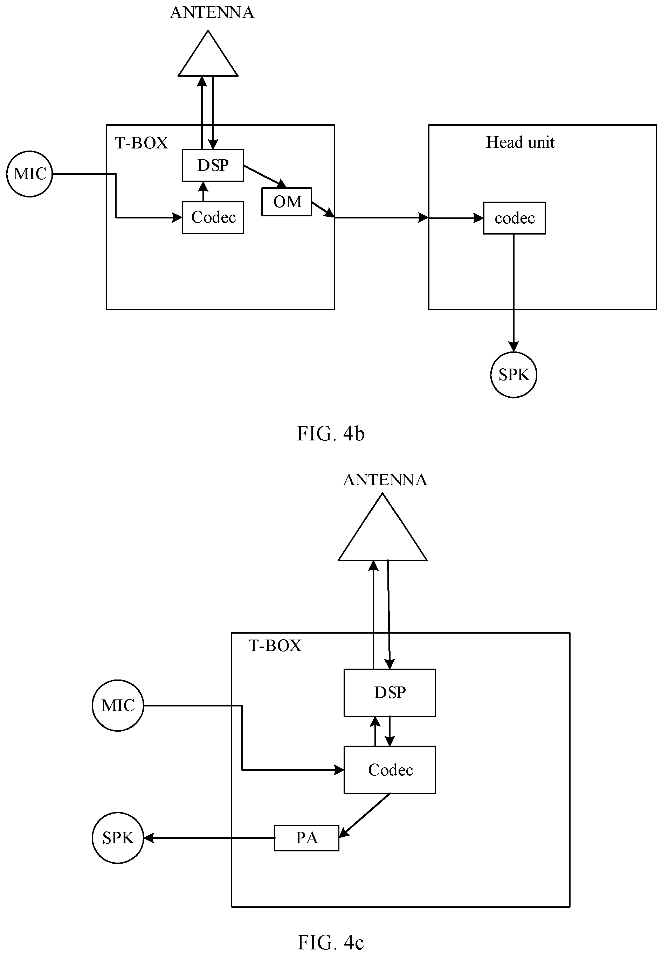

FIG. 4b is a schematic diagram of a path corresponding to a USB AUDIO channel according to an embodiment of this application. As shown in FIG. 4b, the path corresponding to the USB AUDIO channel may include a T-Box, a head unit, a microphone MIC, an antenna Antenna, and a speaker SPK. The T-Box may include a digital signal processor DSP, a codec Codec, and an OM module. The head unit may include a Codec. An arrow in the figure may correspond to a line in a path, and indicates a flow direction of audio data. After the audio data is input through the microphone, the audio data may be encoded by the codec on the T-Box and sent to the DSP for processing. After the DSP processes the data, the data may be sent to the antenna. The antenna may be configured to communicate with a baseline to implement a call, to obtain the audio data returned during the communication. The DSP may receive the returned audio data and send the audio data to the OM module. The OM module may be a process module in a processor of the T-Box, and may be configured to transmit the data, and send the data to the codec on the head unit for decoding. The Codec on the head unit decodes the data and sends the data to the speaker for playing, to implement a voice call on a vehicle.

FIG. 4c is a schematic diagram of a path corresponding to a SPK channel according to an embodiment of this application. As shown in FIG. 4c, the path corresponding to the SPK channel may include a T-Box, a microphone MIC, an antenna Antenna, and a speaker SPK. The T-Box may include a digital signal processor DSP, a codec Codec, and an amplifier PA. An arrow in the figure may correspond to a line in a path, and indicates a flow direction of audio data. After the audio data is input through the microphone, the audio data may be encoded by the codec and then sent to the DSP for processing. After the DSP processes the data, the data may be sent to the antenna. The antenna may be configured to communicate with a baseline to implement a call, to obtain the audio data returned during the communication. The DSP may receive the returned audio data, and send the audio data to the codec for decoding, and the audio data is sent to the amplifier PA. The PA sends the audio data to the speaker for playing, to implement a voice call on a vehicle.

If a specific audio channel has a fault, the fault may be caused by disconnection of lines corresponding to one or more arrows corresponding to the audio channel in FIG. 4a to FIG. 4c. In a possible implementation, in step S201, the audio channel selection system may collect the second audio sequence received by the speaker. For example, in FIG. 4a, the second audio sequence sent by the head unit to the speaker may be collected; in FIG. 4b, the second audio sequence sent by the codec in the head unit to the speaker may be collected; and in FIG. 4c, the second audio sequence sent by the amplifier to the speaker may be collected.

Step S302: Determine an audio channel that does not have a fault and that has optimal audio quality corresponding to the second audio sequence.

In this way, a faulty audio channel can be excluded, so that a play exception risk is reduced during voice play. This improves user experience.

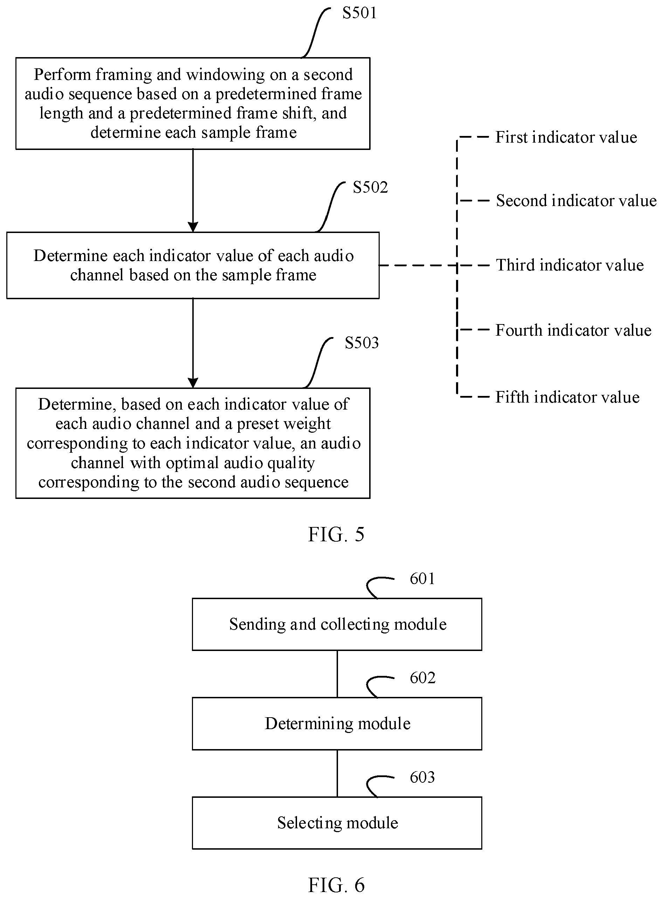

In a possible implementation, in a process of determining an audio channel with optimal audio quality corresponding to the second audio sequence, each indicator value of the second audio sequence may be further determined, to determine audio quality of each second audio sequence, and then determine an audio channel with best audio quality corresponding to the second audio sequence. For the process, refer to FIG. 5.

FIG. 5 is a flowchart of an audio channel selection method according to an embodiment of this application. As shown in FIG. 5, step S202 includes the following steps.

Step S501: Perform framing and windowing on a second audio sequence based on a predetermined frame length and a predetermined frame shift, and determine each sample frame.

The predetermined frame length and frame shift may be set based on a requirement, and the frame shift may be used to avoid an excessively large signal change between two adjacent sample frames. Through the windowing, signals of sample frames obtained after the framing is performed on the second audio sequence may be consecutive, and each sample frame may show a characteristic of a periodic function. This facilitates subsequent processing to determine an indicator value.

Step S502: Determine each indicator value of each audio channel based on the sample frame.

Each audio channel may have each corresponding indicator value, and each indicator value may indicate audio quality of a corresponding second audio sequence.

In a possible implementation, the indicator value includes a first indicator value, and step S502 includes: determining each first indicator value of each audio channel based on a sampling rate and/or quantization precision of the sample frame.

A corresponding first indicator value may be determined based on an average of sampling rates and/or an average of quantization precision that are/is of each sample frame corresponding to the second audio sequence. A higher average of sampling rates and/or a higher average of quantization precision that are/is of each sample frame in the second audio sequence may indicate a higher first indicator value of a corresponding audio channel.

In a possible implementation, scoring may be performed based on a sampling rate and/or quantization precision of each sample frame, to determine a first indicator value of a corresponding audio channel. For example, an average of sampling rates and an average of quantization precision of each sample frame in each second audio sequence may be calculated. For a sampling rate obtained through calculation, 10 may be used as a full score. If the sampling rate is below 8k, 2 points are obtained. If the sampling rate is between 8k and 16k, 4 points are obtained. The rest may be obtained by analogy. For quantization precision obtained through calculation, if the quantization precision is 8 bits, 3 points are obtained. If the quantization precision is 16 bits, 6 points are obtained. The rest may be obtained by analogy. A score corresponding to the second audio sequence may be obtained by adding a score corresponding to the sampling rate and a score corresponding to the quantization precision and dividing the sum by 2 (or separately performing weighting on a score corresponding to the sampling rate and a score corresponding to the quantization precision, adding two weighted scores, and then dividing the sum by 2). The score may be used as the first indicator value of the audio channel corresponding to the second audio sequence.

In a possible implementation, the indicator value includes a second indicator value, and step S502 includes: determining a quantity of invalid frames in sample frames, and determining each second indicator value of each audio channel based on the quantity of invalid frames.

The invalid frame is a sample frame in which a quantity of points that meet a preset condition in sampling points of the frame is greater than a predetermined threshold, and the points that meet the preset condition are determined based on amplitudes of the sampling points.

For example, the points that meet the preset condition in the sampling points of the sample frame may be at least three adjacent sampling points whose amplitudes are all greater than 0.9 in the sample frame. The predetermined threshold may be determined as required. Therefore, whether the sample frame includes excessive noise may be determined, so that the sample frame including excessive noise may be used as the invalid frame.

A smaller quantity of determined invalid frames in the sample frames may correspond to a higher second indicator value of a corresponding audio channel.

In a possible implementation, scoring may be performed based on the quantity of invalid frames in the sample frames, to determine the second indicator value corresponding to the audio channel. For example, 10 may be used as a full score. If the quantity of invalid frames is 0, 10 points are obtained; if the quantity of invalid frames is 1 to 10, 9 points are obtained; if the quantity of invalid frames is 10 to 20, 8 points are obtained; and the rest may be obtained by analogy. The score may be used as the second indicator value of the audio channel corresponding to the second audio sequence.

In a possible implementation, the indicator value includes a third indicator value, and step S502 includes: determining a cut-off frequency of each sample frame based on a header frequency, a trailer frequency, and a maximum roll-off value of each sample frame; and determining each third indicator value of each audio channel based on the cut-off frequency of each sample frame.

The maximum roll-off value is a difference between a header power value and a trailer power value of the sample frame. A header of the sample frame may be a first sampling point in the sample frame, or first several sampling points of a specified quantity. A trailer of the sample frame may be a last sampling point in the sample frame, or last several sampling points of a specified quantity. The cut-off frequency may be a frequency corresponding to a sampling point when power suddenly decreases or power slowly decreases to a predetermined threshold as the header frequency and the trailer frequency of the sample frame increase. The predetermined threshold may be determined based on the maximum roll-off value (for example, may be 80% of the maximum roll-off value). Two cut-off frequencies may be respectively determined for the head and the trailer of the sample frame, and an average of the two cut-off frequencies is used as the cut-off frequency of the sample frame.

A corresponding third indicator value may be determined based on an average of cut-off frequencies of each sample frame corresponding to the second audio sequence. A larger average of cut-off frequencies of each sample frame in the second audio sequence indicates a higher third indicator value of a corresponding audio channel.

In a possible implementation, scoring may be performed based on the cut-off frequency of each sample frame, to determine a third indicator value of a corresponding audio channel. For example, an average of cut-off frequencies of each sample frame in each second audio sequence may be calculated. For the calculated average of cut-off frequencies, 10 may be used as a full score. If the average of cut-off frequencies is from 3400 Hz to 3100 Hz, 10 points are obtained. If the average of cut-off frequencies is from 3100 Hz to 2800 Hz, 9 points are obtained. The rest may be obtained by analogy. The score may be used as the third indicator value of the audio channel corresponding to the second audio sequence.

In a possible implementation, the indicator value includes a fourth indicator value, and step S502 includes: performing Fourier transform on each sample frame to obtain a transformed sample frame; determining, based on the transformed sample frame, two sub-band signals having a same bandwidth in a positive frequency component; and determining each fourth indicator value of each audio channel based on energy values of the two sub-band signals.

For a transformed sample frame, two sub-band signals having a same bandwidth may be randomly selected from the positive frequency component. A difference between the energy values of the two sub-band signals may be calculated, and a fourth indicator value of a corresponding audio channel is determined based on an average of differences between energy values of each sample frame corresponding to the second audio sequence.

A larger average of differences between energy values of each sample frame in the second audio sequence indicates a larger fourth indicator value of a corresponding audio channel.

In a possible implementation, scoring may be performed based on the difference of each sample frame, to determine a fourth indicator value of a corresponding audio channel. For example, an average of differences of each sample frame in each second audio sequence may be calculated. For the average obtained through calculation, 10 may be used as a full score, and preset intervals corresponding to the differences between energy values are set. If a difference between the energy values is within a preset interval corresponding to a larger upper limit value and a larger lower limit value, a score is higher, and the score may be used as the fourth indicator value of the audio channel corresponding to the second audio sequence.

In a possible implementation, the indicator value includes a fifth indicator value, and step S502 includes: performing wavelet transform on each sample frame to obtain a high frequency component and a low frequency component of a transformed sample frame; and determining each fifth indicator value of each audio channel based on the high frequency component and the low frequency component.

Thresholds corresponding to the high frequency component and the low frequency component may be respectively set. The high frequency component may be a component whose frequency is higher than a predetermined threshold in the transformed sample frame, and the low frequency component may be a component whose frequency is lower than the predetermined threshold in the transformed sample frame. For a transformed sample frame, summation may be performed on all high frequency components to obtain a total high frequency quantity, summation may be performed on all low frequency components to obtain a total low frequency quantity, and a difference between the total high frequency quantity and the total low frequency quantity is determined. A fifth indicator value of a corresponding audio channel may be determined based on an average of differences between the total high frequency quantity and the total low frequency quantity of each sample frame corresponding to the second audio sequence.

A larger average of differences between the total high frequency quantity and the total low frequency quantity of each sample frame in the second audio sequence indicates a larger fifth indicator value of a corresponding audio channel. In a possible implementation, scoring may be performed based on the difference of each sample frame, to determine a fifth indicator value of a corresponding audio channel. For example, an average of differences of each sample frame in each second audio sequence may be calculated. For the average obtained through calculation, 10 may be used as a full score, and preset intervals corresponding to the differences between the total high frequency quantity and the total low frequency quantity are set. If a difference between the total high frequency quantity and the total low frequency quantity is within a preset interval corresponding to a larger upper limit value and a larger lower limit value, a score is higher, and the score may be used as the fifth indicator value of the audio channel corresponding to the second audio sequence.

Step S503: Determine, based on each indicator value of each audio channel and a preset weight corresponding to each indicator value, an audio channel with optimal audio quality corresponding to the second audio sequence.

The weight may be preset as required. For an audio channel, each indicator value (for example, at least one of the first to fifth indicator values) may be multiplied by a corresponding preset weight to obtain a total score. A second audio sequence corresponding to a highest total score may be selected as a second audio sequence with optimal audio quality, and an audio channel corresponding to the second audio sequence is determined.

According to this embodiment of this application, audio quality of the second audio sequence is determined based on the indicator value and the corresponding weight. In this way, determined audio quality of each second audio sequence is more accurate, and an audio channel corresponding to better audio quality can be determined, so that when a voice service is obtained, audio quality of played voices is better. This improves user experience.

In a possible implementation, the weight may be set to 0.2, and for a calculation manner of a total score z, refer to formula (1): $z = 0.2 x + 0.2 y + 0.2 c + 0.2 v + 0.2 b$ where
x, y, c, v, and b may respectively indicate the first indicator value, the second indicator value, the third indicator value, the fourth indicator value, and the fifth indicator value.

In a possible implementation, if it is determined whether an audio channel is faulty, when the total score z is determined, a parameter n may be further multiplied on the basis of formula (1). When a corresponding audio channel is faulty, a value of n is 0, otherwise the value of n is 1. In this way, a faulty audio channel is excluded. For details, refer to formula (2): $z = n * \left(0.2x+0.2y+0.2c+0.2v+0.2b\right)$

After the audio channel with optimal audio quality is determined, the audio channel selection system may send a result to the audio drive system, and the audio drive system may be configured with the codec Codec, the amplifier PA, and a corresponding audio channel based on the result, so that when a voice service is obtained subsequently, the audio channel may be selected for voice play.

Step S203: The audio channel selecting system selects the audio channel with optimal audio quality for voice play when the voice service is obtained.

For example, if it is determined in step S202 that the LINEOUT channel is the channel with optimal audio quality corresponding to the second audio sequence, when the voice service (for example, an ECALL service) is obtained, the LINEOUT channel may be selected for voice play. The voice service may be a voice notification sent by a base station to a vehicle, or a response returned by another party that makes a call with a user on a vehicle (for example, a voice service received from the antenna Antenna in the application scenarios in FIG. 4a, FIG. 4b, and FIG. 4c). After 30 minutes, step S201 and step S202 are performed again to update an audio channel selection result, and in step S202, it is determined that the SPK channel is the channel with optimal audio quality corresponding to the second audio sequence. After this step, in step S203, when the voice service is obtained, the SPK channel may be selected for voice play until the audio channel selection result is updated next time.

For a path for voice play through each audio channel, reference may be made to FIG. 4a to FIG. 4c.

FIG. 6 is a diagram of a structure of an audio channel selection apparatus according to an embodiment of this application. The apparatus is used in a vehicle. As shown in FIG. 6, the apparatus includes:
a sending and collecting module 601, configured to: send a first audio sequence to each audio channel, and collect each second audio sequence output by each audio channel;
a determining module 602, configured to determine, based on each second audio sequence, an audio channel with optimal audio quality corresponding to the second audio sequence; and
a selecting module 603, configured to select the audio channel with optimal audio quality for voice play when a voice service is obtained.

According to this embodiment of this application, the audio channel with optimal audio quality corresponding to the second audio sequence is determined by collecting the second audio sequence. Therefore, when the voice service is obtained, the audio channel with optimal audio quality may be selected for voice play, so that a channel for current voice play is selected based on audio quality. In this way, when a user performs a voice call on the vehicle, audio quality during voice play is better. This improves user experience.

In a possible implementation, the audio channel includes at least one of a speaker channel, a line output channel, and a universal serial bus USB audio channel.

Therefore, an audio channel with better audio quality may be flexibly selected, to improve user experience.

In a possible implementation, the determining module is configured to: determine, based on each second audio sequence, whether each audio channel has a fault; and determine an audio channel that does not have a fault and that has optimal audio quality corresponding to the second audio sequence.

According to this embodiment of this application, whether each audio channel has a fault is determined, so that a faulty audio channel can be excluded and a play exception risk is reduced during voice play. This improves user experience.

In a possible implementation, the determining module is configured to: perform framing and windowing on the second audio sequence based on a predetermined frame length and a predetermined frame shift, and determine each sample frame; determine each indicator value of each audio channel based on the sample frame; and determine, based on each indicator value of each audio channel and a preset weight corresponding to each indicator value, the audio channel with optimal audio quality corresponding to the second audio sequence.

According to this embodiment of this application, framing and windowing are performed on the second audio sequence, so that the second audio sequence can be easily processed to determine the indicator value. The audio channel with optimal audio quality corresponding to the second audio sequence is determined based on the indicator value and the preset weight corresponding to each indicator value. In this way, determined audio quality of each second audio sequence is more accurate, and an audio channel corresponding to better audio quality can be determined, so that when a voice service is obtained, audio quality of played voices is better. This improves user experience.

In a possible implementation, the indicator value includes a first indicator value, and the determining each indicator value of each audio channel based on the sample frame includes: determining each first indicator value of each audio channel based on a sampling rate and/or quantization precision of the sample frame.

According to this embodiment of this application, each first indicator value is determined based on the sampling rate and/or the quantization precision, so that audio quality of each second audio sequence can be more accurately quantized. In this way, an audio channel corresponding to better audio quality can be determined, so that when a voice service is obtained, audio quality of played voices is better.

In a possible implementation, the indicator value includes a second indicator value, and the determining each indicator value of each audio channel based on the sample frame includes: determining a quantity of invalid frames in the sample frames, where the invalid frame is a sample frame in which a quantity of points that meet a preset condition in sampling points of the frame is greater than a predetermined threshold, and the points that meet the preset condition are determined based on amplitudes of the sampling points; and determining each second indicator value of each audio channel based on the quantity of invalid frames.

According to this embodiment of this application, each second indicator value is determined based on the quantity of invalid frames, so that audio quality of each second audio sequence can be more accurately quantized. In this way, an audio channel corresponding to better audio quality can be determined, so that when a voice service is obtained, audio quality of played voices is better.

In a possible implementation, the indicator value includes a third indicator value, and the determining each indicator value of each audio channel based on the sample frame includes: determining a cut-off frequency of each sample frame based on a header frequency, a trailer frequency, and a maximum roll-off value of each sample frame, where the maximum roll-off value is a difference between a header power value and a trailer power value of the sample frame; and determining each third indicator value of each audio channel based on the cut-off frequency of each sample frame.

According to this embodiment of this application, each third indicator value is determined based on the cut-off frequency, so that audio quality of each second audio sequence can be more accurately quantized. In this way, an audio channel corresponding to better audio quality can be determined, so that when a voice service is obtained, audio quality of played voices is better.

In a possible implementation, the indicator value includes a fourth indicator value, and the determining each indicator value of each audio channel based on the sample frame includes: performing Fourier transform on each sample frame to obtain a transformed sample frame; determining, based on the transformed sample frame, two sub-band signals having a same bandwidth in a positive frequency component; and determining each fourth indicator value of each audio channel based on energy values of the two sub-band signals.

According to this embodiment of this application, each fourth indicator value is determined based on the energy values of the sub-band signals, so that audio quality of each second audio sequence can be more accurately quantized. In this way, an audio channel corresponding to better audio quality can be determined, so that when a voice service is obtained, audio quality of played voices is better.

In a possible implementation, the indicator value includes a fifth indicator value, and the determining each indicator value of each audio channel based on the sample frame includes: obtaining a high frequency component and a low frequency component of a transformed sample frame by performing wavelet transform on each sample frame; and determining each fifth indicator value of each audio channel based on the high frequency component and the low frequency component.

According to this embodiment of this application, each fifth indicator value is determined based on the high frequency component and the low frequency component, so that audio quality of each second audio sequence can be more accurately quantized. In this way, an audio channel corresponding to better audio quality can be determined, so that when a voice service is obtained, audio quality of played voices is better.

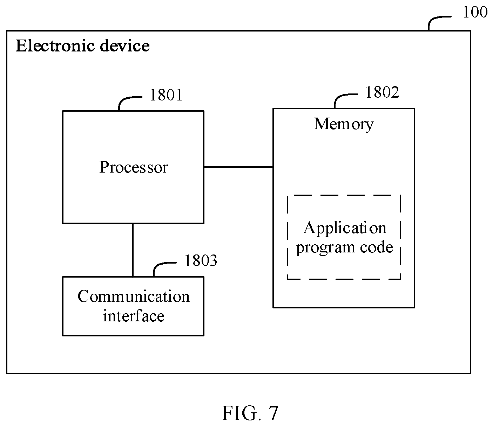

FIG. 7 is a diagram of a structure of an electronic device 100 according to an embodiment of this application. As shown in FIG. 7, the electronic device 100 may be the foregoing vehicle, and performs the audio channel selection method shown in any one of FIG. 2 to FIG. 5. The electronic device 100 includes at least one processor 1801, at least one memory 1802, and at least one communication interface 1803. In addition, the electronic device may further include a general-purpose component like an antenna. Details are not described herein again.

The following specifically describes the components of the electronic device 100 with reference to FIG. 7.

The processor 1801 may be a general-purpose central processing unit (CPU), a microprocessor, an application-specific integrated circuit (application-specific integrated circuit, ASIC), or one or more integrated circuits configured to control program execution of the solutions in this application. The processor 1801 may include one or more processing units. For example, the processor 1801 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate components, or may be integrated into one or more processors.

The communication interface 1803 is configured to communicate with another electronic device or communication network, for example, an Ethernet, a radio access network (RAN), a core network, or a wireless local area network (Wireless Local Area Network, WLAN).

The memory 1802 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that can be accessed by a computer. However, this is not limited thereto. The memory may exist independently, and is connected to the processor through a bus. Alternatively, the memory and the processor may be integrated.

The memory 1802 is configured to store application program code for executing the foregoing solutions, and the processor 1801 controls execution. The processor 1801 is configured to execute the application program code stored in the memory 1802.

In the foregoing embodiments, the description of each embodiment has respective focuses. For a part that is not described in detail in an embodiment, refer to related descriptions in other embodiments.

An embodiment of this application provides an audio channel selection apparatus, including a processor and a memory configured to store executable instructions of the processor, where the processor is configured to implement the foregoing method when executing the instructions.

An embodiment of this application provides a non-volatile computer-readable storage medium storing computer program instructions, and when the computer program instructions are executed by a processor, the foregoing method is implemented.

An embodiment of this application provides a terminal device. The terminal device may perform the foregoing method. An embodiment of this application provides a computer program product, including computer-readable code or a non-volatile computer-readable storage medium carrying computer-readable code. When the computer-readable code runs in a processor of an electronic device, the processor in the electronic device performs the foregoing method.

The computer-readable storage medium may be a tangible device that may maintain and store instructions used by an instruction execution device. The computer-readable storage medium may be, for example, but is not limited to an electronic storage device, a magnetic storage device, an optical storage device, an electromagnetic storage device, a semiconductor storage device, or any suitable combination thereof. More specific examples (a non-exhaustive list) of the computer-readable storage medium include: a portable computer disk, a hard disk, a random access memory (Random Access Memory, RAM), a read-only memory (Read-Only Memory, ROM), an erasable programmable read-only memory (Electrically Programmable Read-Only Memory, EPROM, or flash memory), a static random access memory (Static Random Access Memory, SRAM), a portable compact disc read-only memory (Compact Disc Read-Only Memory, CD-ROM), a digital video disc (Digital Video Disc, DVD), a memory stick, a floppy disk, a mechanical coding device, for example, a punched card or a protrusion structure in a groove that stores instructions, and any suitable combination of the foregoing devices.

Computer-readable program instructions or code described herein can be downloaded to respective computing/processing devices from the computer-readable storage medium, or downloaded to an external computer or external storage device via a network, for example, the Internet, a local area network, a wide area network and/or a wireless network. The network may include copper transmission cables, optical fiber transmission, wireless transmission, routers, firewalls, switches, gateway computers, and/or edge servers. A network adapter card or a network interface in each computing/processing device receives the computer-readable program instructions from the network, and forwards the computer-readable program instructions for storage in a computer-readable storage medium in each computing/processing device.

The computer program instructions used to perform the operations in this application may be assembly instructions, instruction set architecture (Instruction Set Architecture, ISA) instructions, machine instructions, machine-related instructions, microcode, firmware instructions, status setting data, or source code or object code written in any combination of one or more programming languages. The programming languages include an object-oriented programming language like Smalltalk or C++, and a conventional procedural programming language like a "C" language or a similar programming language. The computer-readable program instructions may be entirely executed on a user computer, partially executed on a user computer, executed as an independent software package, partially executed on a user computer while partially executed on a remote computer, or entirely executed on a remote computer or a server. In a case involving a remote computer, the remote computer may be connected to a user computer over any type of network, including a local area network (Local Area Network, LAN) or a wide area network (Wide Area Network, WAN), or may be connected to an external computer (for example, connected over the Internet by using an Internet service provider). In some embodiments, an electronic circuit, for example, a programmable logic circuit, a field-programmable gate array (Field-Programmable Gate Array, FPGA), or a programmable logic array (Programmable Logic Array, PLA), is customized by using status information of computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer-readable program instructions.

These computer-readable program instructions may be provided to a processor of a general-purpose computer, a dedicated computer, or another programmable data processing apparatus to produce a machine, so that when the instructions are executed by a processor of a computer or another programmable data processing apparatus, an apparatus for implementing functions/acts specified in one or more blocks in the flowcharts and/or block diagrams is produced. These computer-readable program instructions may also be stored in the computer-readable storage medium. These instructions enable a computer, a programmable data processing apparatus, and/or another device to work in a specific manner. Therefore, the computer-readable medium storing the instructions includes an artifact that includes instructions for implementing various aspects of the functions/acts specified in the one or more blocks in the flowcharts and/or the block diagrams.

The computer-readable program instructions may also be loaded onto a computer, another programmable data processing apparatus, or another device, so that a series of operational steps is performed on the computer, the another programmable data processing apparatus, or the another device to produce a computer-implemented process. Therefore, the instructions executed on the computer, the another programmable data processing apparatus, or the another device implement the functions/acts specified in one or more blocks in the flowcharts and/or block diagrams. The flowcharts and block diagrams in the accompanying drawings show possible implementation of system architectures, functions, and operations of apparatuses, systems, methods, and computer program products according to a plurality of embodiments of this application. In this regard, each block in the flowcharts or block diagrams may indicate a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two consecutive blocks may actually be executed substantially in parallel, and may sometimes be executed in a reverse order, depending on a function involved.

It should also be noted that each block in the block diagrams and/or the flowcharts, and a combination of blocks in the block diagrams and/or the flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware. Although the present invention is described with reference to embodiments, in a process of implementing the present invention that claims protection, a person skilled in the art may understand and implement another variation of the disclosed embodiments by viewing the accompanying drawings, disclosed content, and the appended claims. In the claims, a word "comprising" (comprising) does not exclude another component or step, and "one" or "a" does not exclude a case of a plurality. A single processor or another unit may implement several functions enumerated in the claims. The fact that some measures are described in mutually different dependent claims does not mean that these measures cannot be combined to produce a good effect.

The foregoing has described the embodiments of this application. The foregoing descriptions are illustrative, not exhaustive, and are not limited to the disclosed embodiments. Without departing from the scope of the described embodiments, many modifications and variations are apparent to a person of ordinary skill in the art. Selection of terms used herein is intended to best explain principles of embodiments, practical application, or improvements to technologies in the market, or to enable another person of ordinary skill in the art to understand embodiments disclosed herein.

## Claims

1. An audio channel selection method, wherein the method is applied to a vehicle, and the method comprises:
sending (S201) a first audio sequence to each audio channel, and collecting each second audio sequence output by each audio channel;
determining (S202), based on each second audio sequence, an audio channel with optimal audio quality corresponding to the second audio sequence; and
selecting (S203) the audio channel with optimal audio quality for voice play when a voice service is obtained, wherein the determining (S202), based on each second audio sequence, an audio channel with optimal audio quality corresponding to the second audio sequence comprises:
performing framing and windowing on the second audio sequence based on a predetermined frame length and a predetermined frame shift, and determining each sample frame;
determining each indicator value of each audio channel based on the sample frame; and
determining, based on each indicator value of each audio channel and a preset weight corresponding to each indicator value, the audio channel with optimal audio quality corresponding to the second audio sequence,
wherein the indicator value comprises a third indicator value, and the determining each indicator value of each audio channel based on the sample frame comprises:
determining a cut-off frequency of each sample frame based on a header frequency, a trailer frequency, and a maximum roll-off value of each sample frame, wherein the maximum roll-off value is a difference between a header power value and a trailer power value of the sample frame, wherein a header of the sample frame is a first sampling point in the sample frame, or first several sampling points of a specified quantity and a trailer of the sample frame is a last sampling point in the sample frame, or last several sampling points of a specified quantity; and
determining each third indicator value of each audio channel based on the cut-off frequency of each sample frame.

2. The method according to claim 1, wherein the indicator value comprises a first indicator value, and the determining each indicator value of each audio channel based on the sample frame comprises:
determining each first indicator value of each audio channel based on a sampling rate and/or quantization precision of the sample frame.

3. The method according to claim 1 or 2, wherein the indicator value comprises a second indicator value, and the determining each indicator value of each audio channel based on the sample frame comprises:
determining a quantity of invalid frames in sample frames, wherein the invalid frame is a sample frame in which a quantity of points that meet a preset condition in sampling points of the frame is greater than a predetermined threshold, and the points that meet the preset condition are determined based on amplitudes of the sampling points; and
determining each second indicator value of each audio channel based on the quantity of invalid frames.

4. The method according to any one of claims 1 to 3, wherein the indicator value comprises a fourth indicator value, and the determining each indicator value of each audio channel based on the sample frame comprises:
performing Fourier transform on each sample frame to obtain a transformed sample frame;
determining, based on the transformed sample frame, two sub-band signals having a same bandwidth in a positive frequency component; and
determining each fourth indicator value of each audio channel based on energy values of the two sub-band signals.

5. The method according to any one of claims 1 to 4, wherein the indicator value comprises a fifth indicator value, and the determining each indicator value of each audio channel based on the sample frame comprises:
performing wavelet transform on each sample frame to obtain a high frequency component and a low frequency component of a transformed sample frame; and
determining each fifth indicator value of each audio channel based on the high frequency component and the low frequency component.

6. The method according to any one of claims 1 to 5, wherein the determining (S202), based on each second audio sequence, an audio channel with optimal audio quality corresponding to the second audio sequence comprises:
determining (S301), based on each second audio sequence, whether each audio channel has a fault; and
determining (S302) an audio channel that does not have a fault and that has optimal audio quality corresponding to the second audio sequence.

7. The method according to any one of claims 1 to 6, wherein the audio channel comprises at least one of a speaker channel, a line output channel, and a universal serial bus, USB, audio channel.

8. An audio channel selection apparatus (100), comprising
a processor (1801); and
a memory (1802) configured to store executable instructions of the processor (1801), wherein
the processor (1801) is configured to implement the method according to any one of claims 1 to 7 when executing the instructions.

9. A non-volatile computer-readable storage medium storing computer program instructions, wherein when the computer program instructions are executed by a processor, the method according to any one of claims 1 to 7 is implemented.

10. A computer program product, comprising computer-readable code or a non-volatile computer-readable storage medium carrying computer-readable code, wherein when the computer-readable code runs in an electronic device, a processor in the electronic device performs the method according to any one of claims 1 to 7.

11. A vehicle, wherein the vehicle comprises a processor, and the processor is configured to perform the method according to any one of claims 1 to 7.

## Patentansprüche

1. Audiokanalauswahlverfahren, wobei das Verfahren auf ein Fahrzeug angewendet wird und das Verfahren umfasst:
Senden (S201) einer ersten Audiosequenz an jeden Audiokanal und Erfassen jeder zweiten Audiosequenz, die durch jeden Audiokanal ausgegeben wird;
Bestimmen (S202), basierend auf jeder zweiten Audiosequenz, eines Audiokanals mit optimaler Audioqualität, die der zweiten Audiosequenz entspricht; und
Auswählen (S203) des Audiokanals mit optimaler Audioqualität für eine Sprachwiedergabe, wenn ein Sprachdienst erhalten wird, wobei das Bestimmen (S202), basierend auf jeder zweiten Audiosequenz, eines Audiokanals mit optimaler Audioqualität, die der zweiten Audiosequenz entspricht, umfasst:
Durchführen einer Rahmung und einer Fensterung an der zweiten Audiosequenz basierend auf einer vorbestimmten Rahmenlänge und einer vorbestimmten Rahmenverschiebung, und Bestimmen jedes Abtastrahmens;
Bestimmen jedes Indikatorwerts jedes Audiokanals basierend auf dem Abtastrahmen; und Bestimmen, basierend auf jedem Indikatorwert jedes Audiokanals und einem voreingestellten Gewicht, das jedem Indikatorwert entspricht, des Audiokanals mit optimaler Audioqualität, die der zweiten Audiosequenz entspricht,
wobei der Indikatorwert einen dritten Indikatorwert umfasst, und das Bestimmen jedes Indikatorwerts jedes Audiokanals basierend auf dem Abtastrahmen umfasst:
Bestimmen einer Grenzfrequenz jedes Abtastrahmens basierend auf einer Header-Frequenz, einer Trailer-Frequenz und einem maximalen Roll-off-Wert jedes Abtastrahmens, wobei der maximale Roll-off-Wert eine Differenz zwischen einem Header-Leistungswert und einem Trailer-Leistungswert des Abtastrahmens ist, wobei ein Header des Abtastrahmens ein erster Abtastpunkt in dem Abtastrahmen oder erste mehrere Abtastpunkte einer spezifizierten Anzahl ist und ein Trailer des Abtastrahmens ein letzter Abtastpunkt in dem Abtastrahmen oder letzte mehrere Abtastpunkte einer spezifizierten Anzahl ist; und
Bestimmen jedes dritten Indikatorwerts jedes Audiokanals basierend auf der Grenzfrequenz jedes Abtastrahmens.

2. Verfahren nach Anspruch 1, wobei der Indikatorwert einen ersten Indikatorwert umfasst, und das Bestimmen jedes Indikatorwerts jedes Audiokanals basierend auf dem Abtastrahmen umfasst:
Bestimmen jedes ersten Indikatorwerts jedes Audiokanals basierend auf einer Abtastrate und/oder Quantisierungsgenauigkeit des Abtastrahmens.

3. Verfahren nach Anspruch 1 oder 2, wobei der Indikatorwert einen zweiten Indikatorwert umfasst, und das Bestimmen jedes Indikatorwerts jedes Audiokanals basierend auf dem Abtastrahmen umfasst:
Bestimmen einer Anzahl von ungültigen Rahmen in Abtastrahmen, wobei der ungültige Rahmen ein Abtastrahmen ist, in dem eine Anzahl von Punkten, die eine voreingestellte Bedingung in Abtastpunkten des Rahmens erfüllen, größer als ein vorbestimmter Schwellenwert ist, und die Punkte, die die voreingestellte Bedingung erfüllen, basierend auf Amplituden der Abtastpunkte bestimmt werden; und
Bestimmen jedes zweiten Indikatorwerts jedes Audiokanals basierend auf der Anzahl von ungültigen Rahmen.

4. Verfahren nach einem der Ansprüche 1 bis 3, wobei der Indikatorwert einen vierten Indikatorwert umfasst, und das Bestimmen jedes Indikatorwerts jedes Audiokanals basierend auf dem Abtastrahmen umfasst:
Durchführen einer Fourier-Transformation an jedem Abtastrahmen, um einen transformierten Abtastrahmen zu erhalten;
Bestimmen, basierend auf dem transformierten Abtastrahmen, von zwei Teilbandsignalen, die eine gleiche Bandbreite in einer positiven Frequenzkomponente aufweisen; und
Bestimmen jedes vierten Indikatorwerts jedes Audiokanals basierend auf Energiewerten der zwei Teilbandsignale.

5. Verfahren nach einem der Ansprüche 1 bis 4, wobei der Indikatorwert einen fünften Indikatorwert umfasst, und das Bestimmen jedes Indikatorwerts jedes Audiokanals basierend auf dem Abtastrahmen umfasst:
Durchführen einer Wavelet-Transformation an jedem Abtastrahmen, um eine Hochfrequenzkomponente und eine Niederfrequenzkomponente eines transformierten Abtastrahmens zu erhalten; und
Bestimmen jedes fünften Indikatorwerts jedes Audiokanals basierend auf der Hochfrequenzkomponente und der Niederfrequenzkomponente.

6. Verfahren nach einem der Ansprüche 1 bis 5, wobei das Bestimmen (S202), basierend auf jeder zweiten Audiosequenz, eines Audiokanals mit optimaler Audioqualität, die der zweiten Audiosequenz entspricht, umfasst:
Bestimmen (S301), basierend auf jeder zweiten Audiosequenz, ob jeder Audiokanal einen Fehler aufweist; und
Bestimmen (S302) eines Audiokanals, der keinen Fehler aufweist und der eine optimale Audioqualität, die der zweiten Audiosequenz entspricht, aufweist.

7. Verfahren nach einem der Ansprüche 1 bis 6, wobei der Audiokanal mindestens einen von einem Lautsprecherkanal, einem Leitungsausgabekanal und einem Universal-Serial-Bus(USB)-Audiokanal umfasst.

8. Audiokanalauswahleinrichtung (100), die umfasst einen Prozessor (1801); und
einen Speicher (1802), der konfiguriert ist, um ausführbare Anweisungen des Prozessors (1801) zu speichern, wobei
der Prozessor (1801) konfiguriert ist, um das Verfahren nach einem der Ansprüche 1 bis 7 zu implementieren, wenn die Anweisungen ausgeführt werden.

9. Nichtflüchtiges computerlesbares Speicherungsmedium, das
Computerprogrammanweisungen speichert, wobei, wenn die Computerprogrammanweisungen durch einen Prozessor ausgeführt werden, das Verfahren nach einem der Ansprüche 1 bis 7 implementiert wird.

10. Computerprogrammprodukt, das computerlesbaren Code oder ein nichtflüchtiges computerlesbares Speicherungsmedium, das computerlesbaren Code trägt, umfasst, wobei, wenn der computerlesbare Code in einer elektronischen Vorrichtung abläuft, ein Prozessor in der elektronischen Vorrichtung das Verfahren nach einem der Ansprüche 1 bis 7 durchführt.

11. Fahrzeug, wobei das Fahrzeug einen Prozessor umfasst, und der Prozessor konfiguriert ist, um das Verfahren nach einem der Ansprüche 1 bis 7 durchzuführen.

## Revendications

1. Procédé de sélection de canal audio, dans lequel le procédé est appliqué à un véhicule, et le procédé comprend :
l'envoi (S201) d'une première séquence audio à chaque canal audio, et la collecte de chaque seconde séquence audio délivrée en sortie par chaque canal audio ;
la détermination (S202), en fonction de chaque seconde séquence audio, d'un canal audio ayant une qualité audio optimale correspondant à la seconde séquence audio ; et
la sélection (S203) du canal audio avec une qualité audio optimale pour une lecture vocale, lorsqu'un service vocal est obtenu, dans lequel la détermination (S202), en fonction de chaque seconde séquence audio, d'un canal audio avec une qualité audio optimale correspondant à la seconde séquence audio comprend :
le fait d'effectuer un tramage et un fenêtrage sur la seconde séquence audio en fonction d'une longueur de trame prédéterminée et d'un décalage de trame prédéterminé, et la détermination de chaque trame d'échantillon ;
la détermination de chaque valeur d'indicateur de chaque canal audio en fonction de la trame d'échantillon ; et
la détermination, en fonction de chaque valeur d'indicateur de chaque canal audio et d'un poids prédéfini correspondant à chaque valeur d'indicateur, du canal audio avec une qualité audio optimale correspondant à la seconde séquence audio,
dans lequel la valeur d'indicateur comprend une troisième valeur d'indicateur, et la détermination de chaque valeur d'indicateur de chaque canal audio en fonction de la trame d'échantillon comprend :
la détermination d'une fréquence de coupure de chaque trame d'échantillon en fonction d'une fréquence d'en-tête, d'une fréquence de fin et d'une valeur d'atténuation maximale de chaque trame d'échantillon, dans lequel la valeur d'atténuation maximale est une différence entre une valeur de puissance d'en-tête et une valeur de puissance de fin de la trame d'échantillon, dans lequel un en-tête de la trame d'échantillon est un premier point d'échantillonnage dans la trame d'échantillon, ou plusieurs premiers points d'échantillonnage d'une quantité spécifiée et une fin de la trame d'échantillon est un dernier point d'échantillonnage dans la trame d'échantillon, ou plusieurs derniers points d'échantillonnage d'une quantité spécifiée ; et
la détermination de chaque troisième valeur d'indicateur de chaque canal audio en fonction de la fréquence de coupure de chaque trame d'échantillon.

2. Procédé selon la revendication 1, dans lequel la valeur d'indicateur comprend une première valeur d'indicateur, et la détermination de chaque valeur d'indicateur de chaque canal audio en fonction de la trame d'échantillonnage comprend :
la détermination de chaque première valeur d'indicateur de chaque canal audio en fonction d'un taux d'échantillonnage et/ou d'une précision de quantification de la trame d'échantillon.

3. Procédé selon la revendication 1 ou 2, dans lequel la valeur d'indicateur comprend une deuxième valeur d'indicateur, et la détermination de chaque valeur d'indicateur de chaque canal audio en fonction de la trame d'échantillon comprend :
la détermination d'une quantité de trames non valides dans des trames d'échantillon, dans lequel la trame non valide est une trame d'échantillon dans laquelle une quantité de points qui satisfont à une condition prédéfinie dans des points d'échantillonnage de la trame est supérieure à un seuil prédéterminé, et les points qui satisfont à la condition prédéfinie sont déterminés en fonction d'amplitudes des points d'échantillonnage ; et
la détermination de chaque deuxième valeur d'indicateur de chaque canal audio en fonction de la quantité de trames non valides.

4. Procédé selon l'une quelconque des revendications 1 à 3, dans lequel la valeur d'indicateur comprend une quatrième valeur d'indicateur, et la détermination de chaque valeur d'indicateur de chaque canal audio en fonction de la trame d'échantillon comprend :
le fait d'effectuer une transformée de Fourier sur chaque trame d'échantillon pour obtenir une trame d'échantillon transformée ;
la détermination, en fonction de la trame d'échantillon transformée, de deux signaux de sous-bande ayant une même largeur de bande dans une composante de fréquence positive ; et
la détermination de chaque quatrième valeur d'indicateur de chaque canal audio en fonction de valeurs d'énergie des deux sous-bandes.

5. Procédé selon l'une quelconque des revendications 1 à 4, dans lequel la valeur d'indicateur comprend une cinquième valeur d'indicateur, et la détermination de chaque valeur d'indicateur de chaque canal audio en fonction de la trame d'échantillon comprend :
le fait d'effectuer une transformée en ondelettes sur chaque trame d'échantillon pour obtenir une composante haute fréquence et une composante basse fréquence d'une trame d'échantillon transformée ; et
la détermination de chaque cinquième valeur d'indicateur de chaque canal audio en fonction de la composante haute fréquence et de la composante basse fréquence.

6. Procédé selon l'une quelconque des revendications 1 à 5, dans lequel la détermination (S202), en fonction de chaque seconde séquence audio, d'un canal audio avec une qualité audio optimale correspondant à la seconde séquence audio comprend :
le fait de déterminer (S301), en fonction de chaque seconde séquence audio, si chaque canal audio a un défaut ; et
la détermination (S302) d'un canal audio qui n'a pas de défaut et qui a une qualité audio optimale correspondant à la seconde séquence audio.

7. Procédé selon l'une quelconque des revendications 1 à 6, dans lequel le canal audio comprend au moins l'un parmi un canal de haut-parleur, un canal de sortie de ligne et un canal audio de bus série universel, USB.

8. Appareil de sélection de canal audio (100), comprenant un processeur (1801) ; et une mémoire (1802) configurée pour stocker des instructions exécutables du processeur (1801), dans lequel
le processeur (1801) est configuré pour mettre en œuvre le procédé selon l'une quelconque des revendications 1 à 7, lorsqu'il exécute les instructions.

9. Support de stockage non volatil lisible par ordinateur stockant des instructions de programme informatique, dans lequel, lorsque les instructions de programme informatique sont exécutées par un processeur, le procédé selon l'une quelconque des revendications 1 à 7 est mis en œuvre.

10. Produit-programme d'ordinateur, comprenant un code lisible par ordinateur ou un support de stockage non volatil lisible par ordinateur portant un code lisible par ordinateur, dans lequel, lorsque le code lisible par ordinateur s'exécute dans un dispositif électronique, un processeur dans le dispositif électronique effectue le procédé selon l'une quelconque des revendications 1 à 7.

11. Véhicule, dans lequel le véhicule comprend un processeur et le processeur est configuré pour effectuer le procédé selon l'une quelconque des revendications 1 à 7.
